Europäisches Patentamt

European Patent Office

Office européen des brevets

(19)

(11) Veröffentlichungsnummer: **0 170 616**
**B1**

(12) **EUROPÄISCHE PATENTSCHRIFT**

(45) Veröffentlichungstag der Patentschrift:
16.03.88

(21) Anmeldenummer: **85810261.9**

(22) Anmeldetag: **07.06.85**

(51) Int. Cl.⁴: **F 28 F 25/08,** F 28 C 1/14

(54) Anordnung zur Verminderung der Schwadenbildung bei einem Hybridkühlturm.

(30) Priorität: **03.08.84 CH 3800/84**

(43) Veröffentlichungstag der Anmeldung:
**05.02.86 Patentblatt 86/6**

(45) Bekanntmachung des Hinweises auf die Patenterteilung:
**16.03.88 Patentblatt 88/11**

(84) Benannte Vertragsstaaten:
**CH DE FR GB LI**

(56) Entgegenhaltungen:
**CH-A-639 189
DE-A-1 253 294
DE-B-2 532 544
DE-B-2 950 803
FR-A-2 446 461
US-A-4 269 796**

(73) Patentinhaber: **ELEKTROWATT
INGENIEURUNTERNEHMUNG AG,
Bellerivestrasse 36, CH- 8008 Zürich (CH)**

(72) Erfinder: **Griesser, Lothar, Segantinistrasse 38, CH-
8049 Zürich (CH)**

(74) Vertreter: **White, William, PATENTANWALTS-
BUREAU ISLER AG Postfach 6940 Walchestrasse
23, CH- 8023 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 170 616 B1

## Beschreibung

Bekannte Hybrid-Kühltürme sind in der CH-A-639 189, der DB-B-25 32 544 sowie der DB-B-2 950 803 beschrieben. Bei diesen Hybrid-Kühltürmen werden vertikale, oben abgeknickte Rieselplatten einseitig besprüht, so dass auf ihrer trockenen Seite die Wärme indirekt auf die Luft übertragen und somit die Luft trocken erwärmt wird. Bei der DE-B-2 950 803 haben die Platten zur Vergrösserung des Verhältnisses der Trockenzur Nasskühlung Längsrinnen. Durch die Längsrinnen kann jedoch dieses Verhältnis gegenüber den älteren Vorschlägen nach der CH-A-639 189 und der DE-B-25 32 544 nur unwesentlich geändert werden, so dass auch hier ein Teil der Wärme durch Wasserverdunstung übertragen wird, wodurch häufig ein Kühlturmschwaden entsteht.

Ein weiterer bekannter Hybrid-Kühlturm ist in der US-A-4 269 796 beschrieben, gegenüber welcher der Anspruch 1 abgegrenzt ist. Bei diesem Kühlturm werden Wellplatten verwendet. Das zu kühlende Wasser wird am oberen Ende der Platten mittels Sprühdüsen auf die Platten gesprüht und fliesst in den Tälern der Wellplatten nach unten. Am unteren Ende tropft das Wasser in ein Auffangbecken. Ein Kühlturm weist ein Gebläse für die Kühlluft auf, wobei die Luft im Querstrom zum Wasser über die Platten streicht. Die Luft wird auf den trockenen Flächen der Platten erwärmt. Zusätzlich erfolgt beim Kontakt der Luft mit dem Wasser in den Tälern der Wellplatten eine beträchtliche Wasserverdunstung, welche zur Schwadenbildung führt. Weiterhin wird vom Sprühregen am oberen Ende der Platten relativ viel Wasser mit dem Luftstrom mitgerissen und verdunstet. Es ist noch eine Variante mit Kühlung im Gegenstrom erwähnt. Dazu müsste allerdings das Auffangbecken erheblich vom unteren Rand der Platten beabstandet werden, um den Zutritt der Kühlluft von unten zu den Platten zu ermöglichen. Dies vergrössert den freien Fall der Wassertropfen vom unteren Rand der Platten in die Auffangwanne und damit die Verdunstungskühlung, so dass auch hier ein Kühlturmschwaden entsteht.

Aus der FR-A-2 446 461 ist schliesslich ein Nasskühlturm mit Kühlturmeinbauten aus Tuchbahnen bekannt. Eine Trockenkühlung findet hier praktisch nicht statt. Um die Tuchbahnen zu spannen, tragen diese an ihren unteren Enden Sammelkanäle, deren Auslaufende so geformt ist, dass die Kanäle halb gefüllt bleiben und damit die Tuchbahnen beschweren.

Der Erfindung liegt die Aufgabe zugrunde, die bekannten Hybrid-Kühltürme derart weiterzubilden, dass die Luft am Austritt aus dem Kühlturm einen möglichst geringen Wasserdampfgehalt hat. Diese Aufgabe wird durch die kennzeichnenden Merkmale des Anspruches 1 gelöst.

Bei der Anordnung gemäss dem Anspruch 1 werden die Platten nicht, wie bei den bekannten Anordnungen, durch Sprühdüsen auf ihrer gesamten Breite besprüht, sondern durch Verteilerkanäle bloss auf einem Teil ihrer Breite mit dem Wasser beaufschlagt. Die nicht mit dem Wasser beaufschlagte Plattenbreite wirkt dabei als Kühlrippe. Die freie Wasseroberfläche kann daher im Verhältnis zur trockenen Oberfläche der Platten klein gehalten werden, so dass der Trockenkühlanteil ohne baulichen Mehraufwand hoch gewählt werden kann. Im Gegensatz zu bekannten reinen Trockenkühltürmen sind dabei die Einbauten bedeutend leichter und billiger und der Strömungswiderstand der Luft durch die Einbauten ist erheblich geringer. Durch das Sammeln des Wassers in Sammelkanälen am unteren Ende der Platten wird der Nasskühlanteil zusätzlich reduziert.

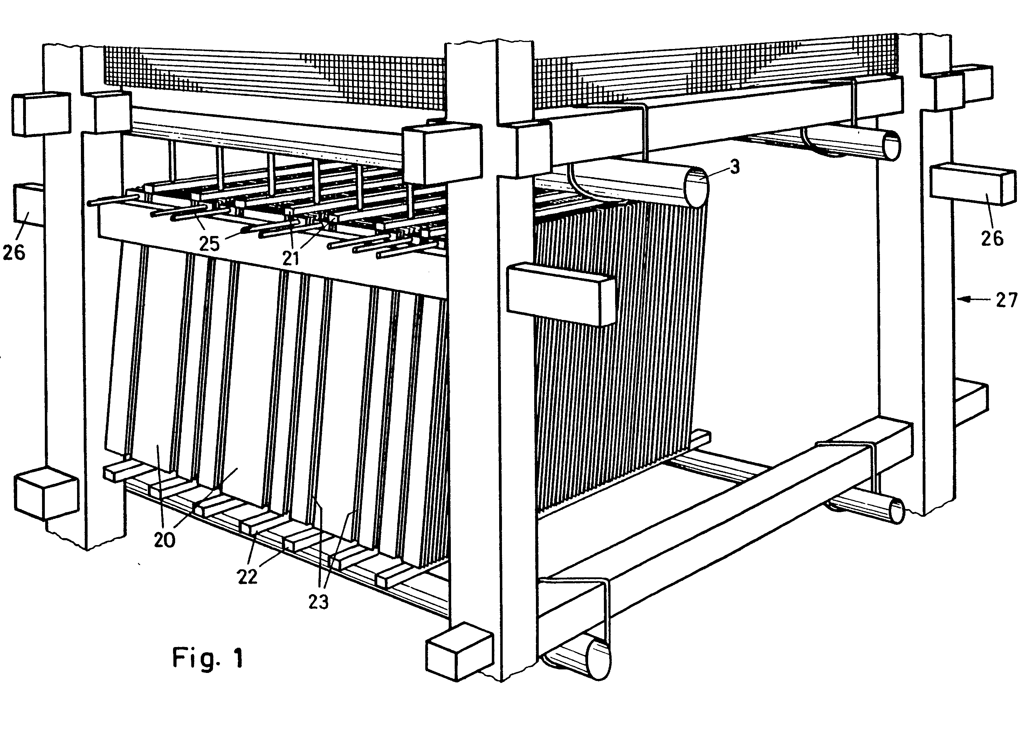

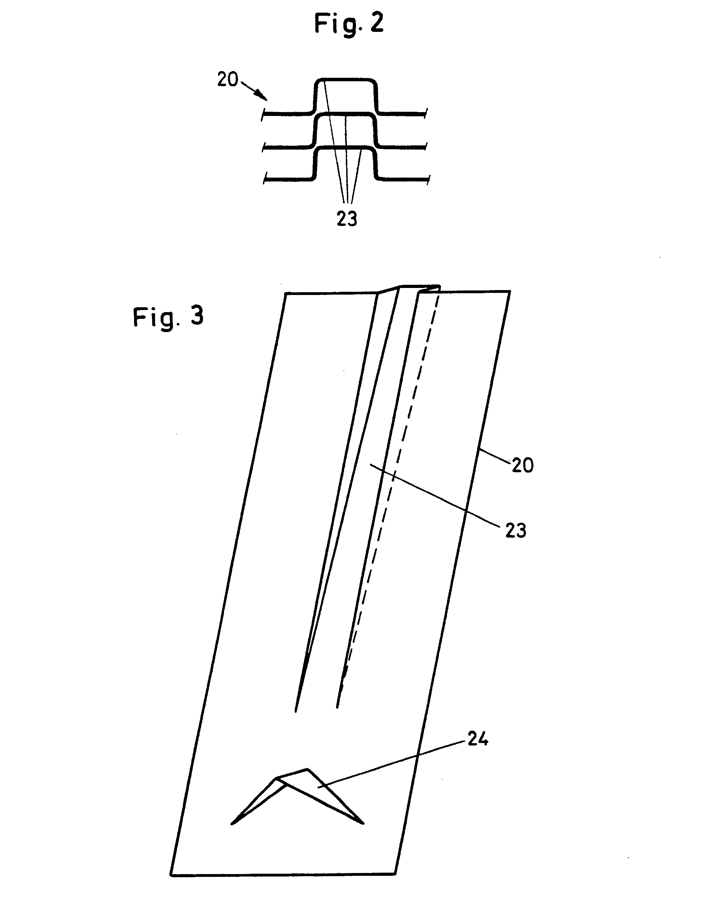

Nachfolgend werden Ausführungsbeispiele der Erfindung anhand der Zeichnung näher erläutert.
Es zeigen:
Fig. 1 die Kühlturmeinbauten,
Fig. 2 einen Querschnitt durch die Plattenanordnung,
Fig. 3 eine Variante der Platten nach Fig. 1.
Der Kühlturm wird nach Fig. 1 anstelle der üblichen Rieseleinbauten mit Platten 20 aus Aluminium oder einem anderen Werkstoff hoher Leitfähigkeit versehen. Die Platten 20 sind auf Stangen 25 aufgereiht, welche von Querträgern 26 eines im Kühlturm aufgebauten Gerüstes 27 getragen werden. Die Platten 20 werden durch Verteilerkanäle 21 mit Wasser aus der Warmwasserverteilung 3 beaufschlagt. Die Platten 20 weisen unter den Verteilkanälen liegende Rinnen 23 auf. Diese können durch Abkanten der Platten 20 (Fig. 2) oder durch Stege auf den Platten 20 (Fig. 2) oder durch Stege auf den Platten 20 gebildet werden. Das zu kühlende Wasser fliesst in den Rinnen 23 nach unten. Zur Verbesserung der Wasserströmung in den Rinnen 23 sind die Platten 20 um einen Winkel von ca. 20° gegen die Senkrechte geneigt. Das Wasser wird unter den Platten 20 in Sammelkanälen 22 aufgefangen und beispielsweise dem Turbinenkondensator wieder zugeführt.

Der untere Teil der Platten 20 kann so ausgebildet sein, dass das Wasser über einen grösseren Teil der Plattenbreite verteilt wird. Hierzu werden die Platten 20 mit aufgesetzten oder herausgedrückten Verteilerstegen 24 versehen.

Die Luft strömt von unten nach oben zwischen den Platten 20 durch. Auf den mit Wasser beaufschlagten Teilen der Platten 20 bewirkt die Luft eine Verdunstungskühlung des Wassers. Die übrigen Teile der Platte 20 wirken als Wärmeleitungsrippen. Die Luft wird hier trocken erwärmt. Über den Platten 20 vermischen sich die Luftsträhnen aus den einzelnen Plattenbereichen. Da die Luftsträhnen dabei jeweils nahe beieinander liegen, sind hierfür keine Mischer oder ähnliche Einrichtungen erforderlich.

Die übrigen Kühlturmbestandteile entsprechen der beim Naturzug-Nasskühlturm bekannten Technik.

Die Platten 20 können in ihrer Breite auch einstückig ausgebildet werden, so dass sie sich über die ganze Breite zwischen zwei Tragsäulen des Gerüstes 27 erstrecken.

Der in Fig. 2 dargestellte Abstand zwischen zwei Platten beträgt annähernd die Rinnentiefe, was die Verdunstungskühlung zusätzlich herabsetzt. Mit einer solchen Ausführung wird praktisch trocken gekühlt, wobei der Bauaufwand erheblich geringer ist als bei bekannten Trockenkühltürmen mit Ripprohren.

**Patentansprüche**

1. Hybridkühlturm mit einseitig mit Wasser beaufschlagten Kühlturmeinbauplatten (20), die je mindestens eine Längsrinne (23) aufweisen, dadurch gekennzeichnet, dass die Rinnen (23) einen annähernd rechteckigen Querschnitt aufweisen, dass nur die Rinnen (23) an ihren oberen Enden über Verteilkanäle (21) mit Wasser beaufschlagbar sind, dass unter dem unteren Ende der Rinnen (23) Sammelkanäle (22) angeordnet sind, und dass der Abstand zwischen zwei benachbarten Platten (20) annähernd der Rinnentiefe entspricht.

2. Kühlturm nach Anspruch 1, dadurch gekennzeichnet, dass die Platten (20) um einen Winkel von höchstens 45°, vorzugsweise um etwa 20°, gegenüber der Senkrechten geneigt sind.

3. Kühlturm nach Anspruch 1 oder 2, dadurch gekennzeichnet, dass sich die Rinnen (23) ausgehend vom oberen Ende der Platten (20) nur über einen Teil der Plattenlänge erstrecken, und dass im unteren Teil der Platten (20) Verteilerstege (24) angeordnet sind, um das Wasser auf einen grösseren Teil der Plattenbreite zu verteilen.

**Claims**

1. Hybrid cooling tower with built-in cooling-tower plates (20) which receive water on one side and which each have at least one longitudinal groove (23), characterized in that the grooves (23) have an approximately rectangular cross-section, in that only the grooves (23) can receive water at their top ends via distribution channels (21), in that collecting channels (22) are arranged under the bottom end of the grooves (23), and in that the distance between two adjacent plates (20) corresponds approximately to the groove depth.

2. Cooling tower according to Claim 1, characterized in that the plates (20) are inclined at an angle of at most 45°, preferably at approximately 20°, relative to the vertical.

3. Cooling tower according to Claim 1 or 2, characterized in that the grooves (23), starting from the top end of the plates (20), extend over only some of the plate lengths, and in that distributor webs (24) are arranged in the lower part of the plates (20), in order to distribute the water over a larger proportion of the plate width.

**Revendications**

1. Tour de refroidissement hybride avec des plaques incorporées (20) dans la tour de refroidissement, exposées à l'eau sur une face, qui présentent au moins une rainure longitudinale (23), caractérisée en ce que les rainures (23) présentent une section approximativement rectangulaire, en ce que seules les rainures (23) sont exposées à l'eau à leurs extrémités supérieures par l'intermédiaire de canaux de distribution (21), en ce que des canaux collecteurs (22) sont disposés sous les extrémités inférieures des rainures (23) et en ce que la distance entre deux plaques (20) voisines correspond approximativement à la profondeur des rainures.

2. Tour de refroidissement suivant la revendication 1, caractérisée en ce que les plaques (20) sont inclinées par rapport à la verticale d'un angle de 45° au maximum, et de préférence d'environ 20°.

3. Tour de refroidissement suivant la revendication 1 ou 2, caractérisée en ce que les rainures (23) ne s'étendent à partir de l'extrémité supérieure des plaques (20) que sur une partie de la longueur des plaques, et en ce que des déflecteurs (24) sont disposés dans la partie inférieure des plaques (20), pour distribuer l'eau sur une plus grande partie de la largeur des plaques.

Fig. 1

# Fig. 2

20

23

# Fig. 3

20

23

24